# EUROPEAN PATENT SPECIFICATION

(11) **EP 3 575 956 B1**
(45) Date of publication and mention of the grant of the patent: **06.11.2024**
(21) Application number: 17894300.7
(22) Date of filing: 24.01.2017
(51) Int. Cl.: G06F 9/44, G06F 8/34, G06F 8/41, G06F 11/36, G06F 8/51

(54) **GRAPH CONFIGURATION LANGUAGE TRANSFORMATION METHOD AND APPARATUS**
VERFAHREN UND VORRICHTUNG ZUR TRANSFORMATION DER GRAPHENKONFIGURATIONSSPRACHE
PROCÉDÉ ET APPAREIL DE TRANSFORMATION DE LANGAGE DE CONFIGURATION DE GRAPHIQUE

(43) Date of publication of application: 04.12.2019
(73) Proprietor: China Techenergy Co., Ltd, Beijing 100094 (CN); China General Nuclear Power Corporation (CGN), Shenzhen, Guangdong 518027 (CN)
(72) Inventor: JIANG, Guojin, Beijing 100094 (CN); YANG, Chen, Beijing 100094 (CN); GU, Weiqing, Beijing 100094 (CN); YANG, Li, Beijing 100094 (CN); LI, Ming, Beijing 100094 (CN); ZHANG, Zhihui, Beijing 100094 (CN); REN, Baohua, Beijing 100094 (CN); QI, Min, Beijing 100094 (CN); MA, Jianxin, Beijing 100094 (CN)
(74) Representative: Beck & Rössig European Patent Attorneys
(86) International application number: PCT/CN2017/072494
(87) International publication number: WO 2018/137146

(56) References cited:
- CN-A- 101 499 015
- CN-A- 103 279 418
- CN-A- 106 095 471
- CN-A- 106 933 566
- US-B1- 8 972 931
- PRAHLADAVARADAN SAMPATH ET AL: "Translation Validation for Stateflow to C", DESIGN AUTOMATION CONFERENCE, ACM, 2 PENN PLAZA, SUITE 701 NEW YORK NY 10121-0701 USA, 1 June 2014 (2014-06-01), pages 1 - 6, XP058049372, ISBN: 978-1-4503-2730-5, DOI: 10.1145/2593069.2593237
- ABDOULAYE GAMATI ET AL: "A Modeling Paradigm for Integrated Modular Avionics Design", SOFTWARE ENGINEERING AND ADVANCED APPLICATIONS, 2006. SEAA '06. 3 2ND EUROMICRO CONFERENCE ON, IEEE, PI, 1 August 2006 (2006-08-01), pages 134 - 143, XP031016324, ISBN: 978-0-7695-2594-5

## Description

### TECHNICAL FIELD

The present invention relates to data processing technologies, particularly, to a method and apparatus for a program language conversion method of graphic configuration as defined by the preamble portions of claim 1 and 6.

### BACKGROUND ART

In a Distributed Control System (DCS) for industrial control, a code generation tool for graphic configuration software is a software tool that automatically generates code required by an embedded system from user configuration data. DCS has relatively high requirements in performance and reliability for code generation tools for graphic configuration software. Especially in nuclear power industry, quality requirements for software are more stringent.

In a system for nuclear instrument and control, a code generation tool for graphic configuration software is a software tool that automatically generates code required by an embedded system from user configuration data. Basic requirements for a code generation tool in nuclear power systems include high-performance and high-reliability. Although a variety of testing methods such as unit testing and integration debugging are used for code generation tools, correctness of the software tool itself is still difficult to be effectively verified, and a great hidden danger lies in product quality. Particularly in nuclear power industry, quality requirements on software are more stringent. How to ensure correctness of code generation tools for graphic configuration software has become a common issue facing all nuclear power and control suppliers.

At present, various testing methods such as unit testing and integration debugging are typically used for ensuring correctness of code generation tools for graphic configuration software.

However, in conventional methods commonly used presently for ensuring correctness of code generation tools for graphic configuration software for embedded devices in the field of nuclear power, there is an unavoidable issue of ensuring correctness and quality of a software development tool itself. If quality of the code generation tool is not ensured, it is likely that unsafe object code is generated during conversion and generation of code.

For example, SCADE (Safety-Critical Application Development Environment) KCG by the Esterel Technologies, is a code generator for algorithmic configuration in high-security systems. It is a common code generation tool for graphic configuration software for embedded devices in a DCS. However, in ensuring software correctness, merely simulation means are employed to ensure quality of generated graphic configuration code, and SCADE KCG is developed according to aviation standard DO-178B.

In RAHLADAVARADAN SAMPATH ET AL, "Translation Validation for Stateflow to C", DESIGN AUTOMATION CONFERENCE, ACM, 2 PENN PLAZA, SUITE 701 NEWYORK NY 10121-0701 USA, (20140601), ISBN 978-1-4503-2730-5, pages 1 - 6; ABDOULAYE GAMATI ET AL, "A Modeling Paradigm for Integrated Modular Avionics Design", SOFTWARE ENGINEERING AND ADVANCED APPLICATIONS, 2006. SEAA '06. 3 2ND EUROMICRO CONFERENCE ON, IEEE, PI, (20060801), ISBN 978-0-7695-2594-5, pages 134 - 143; and US 8972931 B1 methods to translate and verify code automatically are disclosed.

A method and apparatus for a program language conversion method of graphic configuration comprising the features of the preamble portions of claim 1 and 6 is known from US 8,972,931 B1, which discloses functional testing of computer programming code generated from an executable graphical model including a plurality of graphical objects. At least some of the graphical objects may be linked together, for example, by visual connections, such as arrows or wires, and the connections may represent mathematical or other relationships among the graphical objects. The modeling environment includes a code generator that generates computer programming code, such as text-based source code, from the graphical model. A simulation engine within the modeling environment utilized input data to execute the model, and the model may produce one or more results. The computed results may be examined by a user, for example to evaluate the model's accuracy in representing. A bypass engine may interoperate with the simulation engine in order to functionally test one or more selected portions of the generated code during execution of the graphical model within the context of the graphical model.

However, even with the above existing methods, correctness of a code generation tool itself for graphic configuration software and quality of generated code cannot be ensured. Therefore, a large amount of code verification work needs to be done in safety class nuclear instrument and control systems in the nation. Workload for project implementation is also heavy.

### SUMMARY OF INVENTION

The object of the present invention is to provide a program language conversion method of graphic configuration and apparatus for converting source language of a graphic configuration to program code in a target language to enhance correctness of a code generation tool itself for graphic configuration software and quality of the generated code.

This technical problem is solved by a method as indicated in claims 1 and further by an apparatus as indicated in claim 8. Advantageous embodiments are indicated in further claims.

Optionally, sequentially determining a number of N graphic configuration language layers and corresponding graphic configuration objects in respective graphic configuration language layers according to the hierarchical relationship, includes: determining a graphic configuration object as parent object and graphic configuration objects as child objects at each level, according to the hierarchical relationship; respectively creating one graphic configuration language layer corresponding with the graphic configuration object as parent object and a number of N-1 graphic configuration language layers corresponding with the graphic configuration objects as child objects at each level.

Optionally, verifying correctness of a conversion process and conversion result includes: according to the information on the M graphic configuration objects, sequentially determining whether the graphic configuration objects corresponding with respective graphic configuration language layers are correct.

Optionally, translating the information for the graphic configuration source language into a program code in a target language according to the conversion result includes: according to the basic graphic elements obtained from the splitting, generating code for the respective graphic configuration objects corresponding with the N graphic configuration language layers to obtain the program code in the target language.

Optionally, the method further includes: if the conversion process and conversion result of any one of the graphic configuration language layers fails the correctness verification, prompting a first error message indicating an error in the conversion process and conversion result; receiving a modified result, and after the modified result passes the correctness verification, performing language conversion on a subsequent graphic configuration language layer to the any one of the graphic configuration language layers.

Optionally, the method further includes: verifying the program code in the target language; if the verification result indicates that the program code in the target language is correct, outputting the program code in the target language.

Optionally, the target language is C language, and verifying the program code in the target language includes: determining whether the program code in C language calls a function for drawing basic graphic elements; if the program code in C language calls a function for drawing basic graphic elements, generated a verification result indicating that the program code in the target language is correct; if the program code in C language does not call a function for drawing basic graphic elements, prompting a second error message indicating that the code is incorrectly generated.

Optionally, the basic graphic elements include at least one of the following: points, line segments, circles, rectangles, polygons, and bitmaps.

Optionally, the language layer determining module includes: an object determining unit, configured for determining a graphic configuration object as parent object and graphic configuration objects as child objects at each level, according to the hierarchical relationship; a language layer creating unit, configured for respectively creating one graphic configuration language layer corresponding with the graphic configuration object as parent object and A NUMBER OF N-1 graphic configuration language layers corresponding with the graphic configuration objects as child objects at each level.

Optionally, the language conversion and verification module is configured for, sequentially determining whether the graphic configuration objects corresponding with respective graphic configuration language layers are correct, according to the information on the M graphic configuration objects.

Optionally, the code translation module is configured for, according to the basic graphic elements obtained from the splitting, generating code for the respective graphic configuration objects corresponding with the N graphic configuration language layers to obtain the program code in the target language.

Optionally, the apparatus further includes: an error message prompting module, configured for if the conversion process and conversion result of any one of the graphic configuration language layers fails the correctness verification, prompting a first error message indicating an error in the conversion process and conversion result; a modified result receiving module, configured for receiving a modified result, and after the modified result passes the correctness verification, performing language conversion on a subsequent graphic configuration language layer to the any one of the graphic configuration language layers.

Optionally, the apparatus further includes: a code verification module, configured for verifying the program code in the target language; a code outputting module, configured for, if the verification result indicates that the program code in the target language is correct, outputting the program code in the target language.

Optionally, the target language is C language, and the code verification module is configured for determining whether the program code in C language calls a function for drawing basic graphic elements; if the program code in C language calls a function for drawing basic graphic elements, generating a verification result indicating that the program code in the target language is correct; if the program code in C language does not call a function for drawing basic graphic elements, prompting a second error message indicating that the code is incorrectly generated.

Optionally, the basic graphic elements include at least one of the following: points, line segments, circles, rectangles, polygons, and bitmaps.

According to the program language conversion method of graphic configuration and apparatus provided by the embodiments of the present disclosure, based on the information on relationship among the M graphic configuration objects obtained from the information for the graphic configuration source language, determining a hierarchical relationship among the M graphic configuration objects, according to the hierarchical relationship, sequentially determining N graphic configuration language layers and corresponding graphic configuration objects of respective graphic configuration language layers, and further, sequentially performing language conversion on the respective corresponding graphic configuration objects of the N graphic configuration language layers and verifying correctness of the conversion process and conversion result, if the conversion process and conversion result of respective graphic configuration language layers pass the correctness verification, translating the information for the graphic configuration source language into program code in a target language according to the conversion result. In this way, the conversion from a graphic configuration source language to program code in a target language is achieved.

In comparison with prior art, in a process of graphic configuration language conversion, the present disclosure verifies correctness of its intermediate conversion process of respective graphic configuration language layers and verifies correctness of its conversion result. Only on the premise of the conversion process and the conversion result of each graphic configuration layer both pass correctness verification, is the process of translating the information for the graphic configuration source language into program code in a target language is completed. Thereby, the correctness of the code generation tool itself for graphic configuration software is ensured, and then the quality of the generated code is reliably ensured.

The advantages of the present disclosure are as follows: 1. the code generator itself goes through formal verification, so as to ensure that the code generator itself does not affect correctness of the code generator itself during the code conversion process. 2. The correctness of the target code generated from the conversion. Not only does the code generator perform basic conversion functions, but it also ensures that the code generator itself does not tamper with original semantics of code during the code conversion process.

### BRIEF DESCRIPTION OF THE DRAWINGS

FIG. 1 is an exemplary diagram illustrating mathematical principles of embodiments of the present disclosure;
FIG. 2 is an exemplary diagram illustrating basic principles according to an embodiment of the present disclosure;
FIG. 3 is a flowchart illustrating a program language conversion method of graphic configuration according to Embodiment 1 of the present disclosure;
FIG. 4 is a flowchart illustrating a program language conversion method of graphic configuration according to Embodiment 2 of the present disclosure;
FIG. 5 is a logic block diagram illustrating a graphic configuration language conversion apparatus according to Embodiment 3 of the present disclosure;
FIG. 6 is a logic block diagram illustrating a graphic configuration language conversion apparatus according to Embodiment 4 of the present disclosure.

### DETAILED DESCRIPTIONS OF EMBODIMENTS

The basic inventive concept of the present disclosure is, obtaining source language information of a graphic configuration, the source language information of the graphic configuration source language including information of a number of M graphic configuration objects and relationship information among the M graphic configuration objects; determining a hierarchical relationship among the M graphic configuration objects based on the relationship information among the M graphic configuration objects; according to the hierarchical relationship, sequentially determining a number of N graphic configuration language layers and corresponding graphic configuration objects of respective graphic configuration language layers, wherein M≥1, N≥1, M≥N, and both M and N being integers; sequentially performing program language conversion on respective graphic configuration objects corresponding with the N graphic configuration language layers and verifying correctness of conversion process and conversion results; if the conversion process and conversion result of respective graphic configuration language layers passes correctness verification, translating the source program language of the graphic configuration into program code in a target program language according to the conversion result. Accordingly, correctness of the code generation tool itself for graphic configuration software and quality of the generated code are ensured.

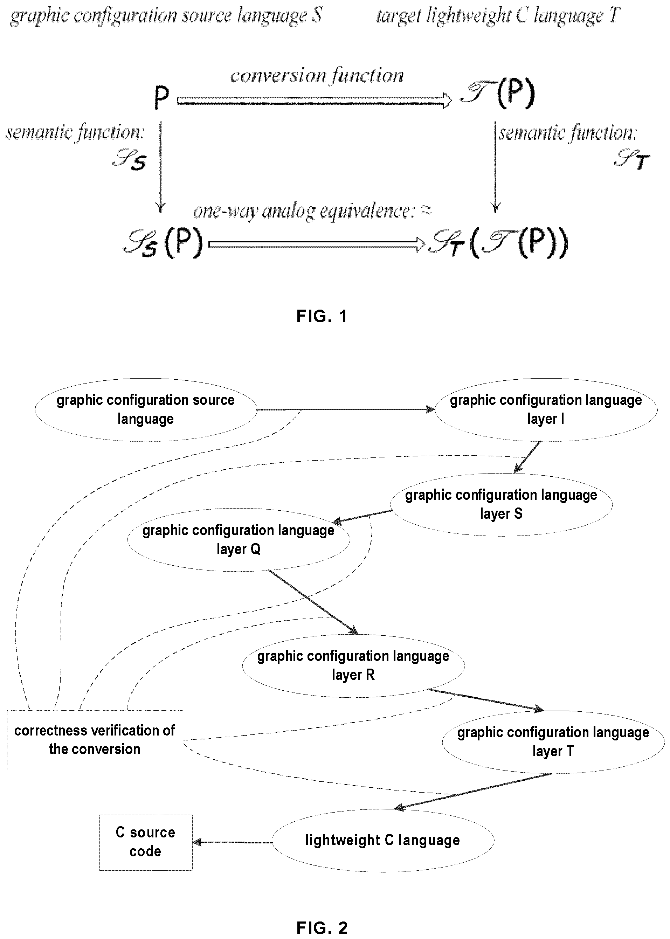

As illustrated in FIG. 1, a program P of an intermediate language S is converted to a program 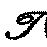 (P) of an intermediate language T. 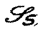 is a semantic function of the intermediate language S, and 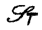 is a semantic function of the intermediate language T. Semantic preservation from the intermediate language S to the intermediate language T refers to:
∀ P. ( sound(P) => sound( 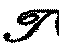 (P)) ^ 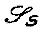 (P) ≈ 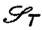 ( 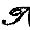 (*P*))

Here, sound(P) and sound( 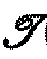 (P)) mean that 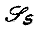 (P) and 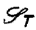 ( 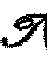 (P)) can be obtained normally.

≈ is a one-way analog equivalence relationship. 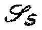 (P) ≈ 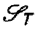 ( 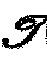 (P)) means that all environment variables of P have matching objects in 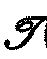 (P), and the changes by 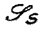 (P) with the environment can be simulated by 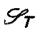 ( 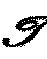 P)) changing with the matching environment.

For a legal graphic configuration language GL program, evaluation results are always determinative, which means certainty of semantic calculation (in a case of non-serial semantics, results of different evaluation processes are also determinative). Therefore, proof of the above one-way simulation relationship is sufficient.

FIG. 2 is an exemplary diagram illustrating basic principles according to an embodiment of the present disclosure. For convenience of describing the basic principles of the present disclosure, five graphic configuration language layers is taken as an example. In practice, a number of graphic configuration language layers may be more or less than five depending on a number of graphic configuration objects and a hierarchical relationship among the graphic configuration objects.

Referring to FIG. 2, first, source language information of a graphic configuration is obtained; next, a hierarchical relationship among one or more graphic configuration objects is determined based on the relationship information among one or more graphic configuration objects obtained from the source language information of the graphic configuration; and further, five graphic configuration language layers are sequentially determined according to the hierarchical relationship, namely, a graphic configuration language layer I, a graphic configuration language layer S, a graphic configuration language layer Q, a graphic configuration language layer R, and a graphic configuration language layer T, and corresponding graphic configuration objects of respective graphic configuration language layers are determined as well; program language conversion on the respective graphic configuration objects corresponding with the five graphic configuration language layers are then sequentially performed, and correctness of each conversion process and conversion result is verified. If the conversion process and conversion result of any one of the graphic configuration language layers fails correctness verification, an error message is prompted to relevant personnel for modification. If correctness verification is passed, conversion of a next graphic configuration language layer is performed. For example, if a graphic configuration language layer I passes correctness verification, then conversion process of a graphic configuration language layer S is performed, until the graphic configuration language layer T has passed correctness verification. A graphic configuration source language is converted into a light weight C language according to the conversion result, and C source code is outputted.

Specific embodying modes of the present disclosure are further described in detail below with reference to the accompanying drawings and embodiments, wherein like elements are indicated with like reference numerals throughout the drawings. The following embodiments are intended to illustrate the present disclosure, but are not intended to limit scopes of the present disclosure.

Those skilled in the art can appreciate that terms of "first", "second", and the like in the present disclosure are merely for differentiating different steps, devices or modules, etc., with neither representing any specific technical meaning nor indicating necessary logical orders therebetween.

### Embodiment 1

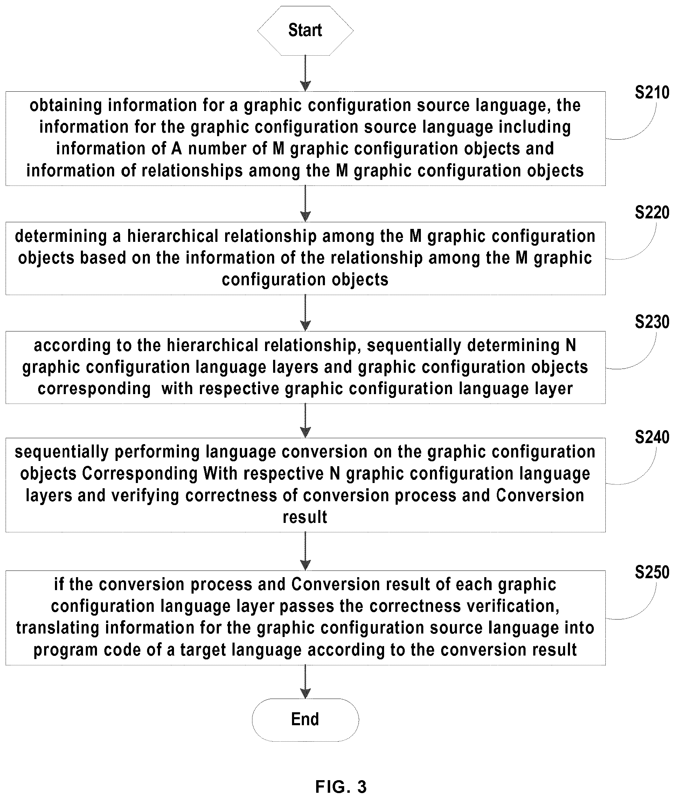

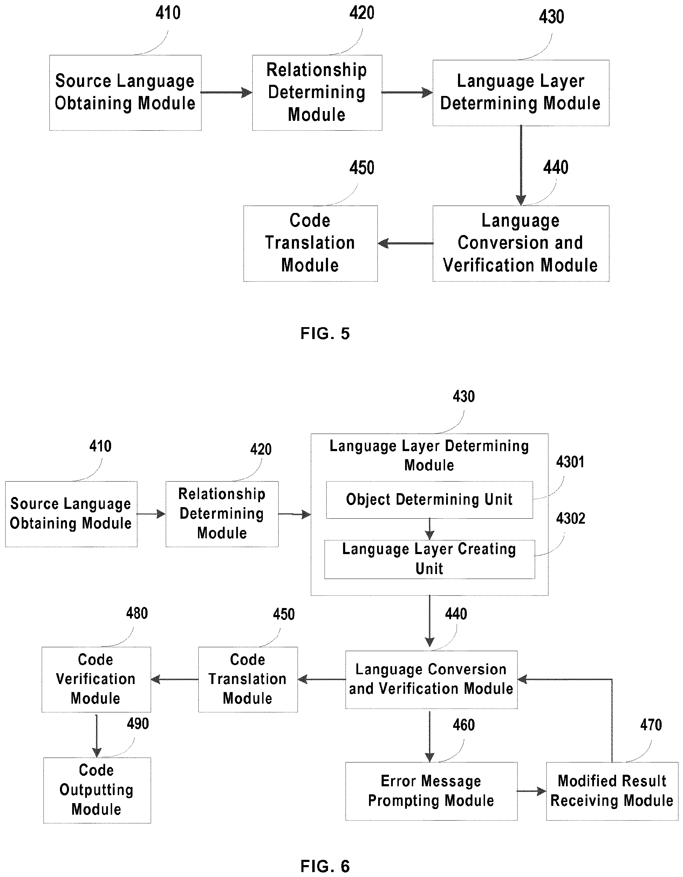

FIG. 3 is a flowchart illustrating a program language conversion method of graphic configuration according to Embodiment 1 of the present disclosure. The method can be performed in a program language conversion of graphic configuration apparatus illustrated in FIG. 5.

Referring to FIG. 3, in step S210, source program language of a graphic configuration source language is obtained, the source program language of the graphic configuration source language including information of a number of M graphic configuration objects and relationship information among the M graphic configuration objects.

Take a nuclear power plant as an example. Suppose there are five graphic configuration objects, namely a plant 1, 2 reactor 1, a reactor 2, a digital protection system 1 and a digital protection system 2 which are configured for the reactor 1. Then, the source program language of the graphic configuration includes information on the above five graphic configuration objects and relationship information among the five graphic configuration objects.

In step S220, a hierarchical relationship among the M graphic configuration objects is determined based on the relationship information among the M graphic configuration objects.

In step S230, N graphic configuration language layers and corresponding graphic configuration objects of respective graphic configuration language layers are sequentially determined according to the hierarchical relationship.

Here, M≥1, N≥1, M≥N, and M and N are both integers.

Still take the aforementioned five graphic configuration objects as an example. In the aforementioned hierarchical relationship, the plant 1 includes two reactors, i.e., the reactor 1 and the reactor 2, the digital protection system 1 and the digital protection system 2 are configured for the reactor 1. Therefore, the reactor 1 includes the digital protection system 1 and the digital protection system 2.

Accordingly, a graphic configuration object corresponding with a first graphic configuration language layer is plant 1. If information on two plants is present in the source program language of the graphic configuration, then there is also a plant 2. Then, graphic configuration objects corresponding with a first graphic configuration language layer are plant 1 and plant 2. Similarly, graphic configuration objects corresponding with a second graphic configuration language layer are reactor 1 and reactor 2, and graphic configuration objects corresponding with a third graphic configuration language layer are digital protection system 1 and digital protection system 2. If the information for the graphic configuration source language includes information on more graphic configuration objects, more graphic configuration language layers can be continuously determined as described above, and will not be repeatedly explained here.

In step S240, program language conversion on respective graphic configuration objects corresponding with the N graphic configuration language layers are sequentially performed, and correctness of the conversion process and conversion result is verified.

In particular, respective graphic configuration objects corresponding with the N graphic configuration language layers are sequentially split into corresponding basic graphic elements. Here, the basic graphic elements may include at least one of the following: points, line segments, circles, rectangles, polygons, and bitmaps, but are not limited thereto. For example, edit block graphic elements in a graphic configuration language may be converted into basic graphic elements of line segments or rectangles, and the corresponding basic graphic elements are stored in nodes of an abstract syntax tree. For another example, trend curves of advanced elements in the graphic configuration language may be converted into basic graphic elements of points or line segments, and the corresponding basic graphic elements are stored in nodes of the abstract syntax tree. For example, a window type advanced element in the graphic configuration language may be converted into basic graphic elements of line segments and rectangles, and the corresponding basic graphic element are stored in nodes of the abstract syntax tree.

In the meantime, the above correctness verification means verification of intermediate conversion processes and results, thereby ensuring quality of a code generation tool itself for graphic configuration. Specifically, according to the information on the M graphic configuration objects, it is sequentially determined whether graphic configuration objects corresponding with respective graphic configuration language layers are correct. For example, if it is determined that a graphic configuration object corresponding with a first graphic configuration language layer include reactor 2 in addition to plant 1, then it is apparent that the first graphic configuration language layer is incorrectly determined.

In step S250, if the conversion process and conversion result of respective graphic configuration language layers passes correctness verification, the information for the graphic configuration source language is translated into program code in a target language according to the conversion result.

Specifically, according to the basic graphic elements obtained from the splitting, code for graphic configuration objects corresponding with the respective N graphic configuration language layers is generated to obtain program code in the target language.

In practice, taking C programming language as an example, the purpose of this step is converting the basic graphic elements into function calls in a lightweight C language, and converting parts involving variables according to classification of assignment operations: assignments to structures and arrays are converted into gcg_memcpy function calls; ordinary assignments are converted into "assign" assignment statements.

According to the program language conversion method of graphic configuration provided by embodiments of the present disclosure, a hierarchical relationship among M graphic configuration objects is determined based on the relationship information among the M graphic configuration objects obtained from source program language of a graphic configuration; N graphic configuration language layers and graphic configuration objects corresponding with respective graphic configuration language layers are sequentially determined according to the hierarchical relationship; further, program language conversion on the respective graphic configuration objects corresponding with the N graphic configuration language layers are sequentially performed and correctness of the conversion process and conversion result is verified; if the conversion process and conversion result of respective graphic configuration language layers passes the correctness verification, the source program language of the graphic configuration is translated into program code in a target language according to the conversion result. As such, conversion from source program language of graphic configuration to program code in a target language is achieved, thereby ensuring correctness of the code generation tool itself for graphic configuration software and quality of the generated code ensured.

### Embodiment 2

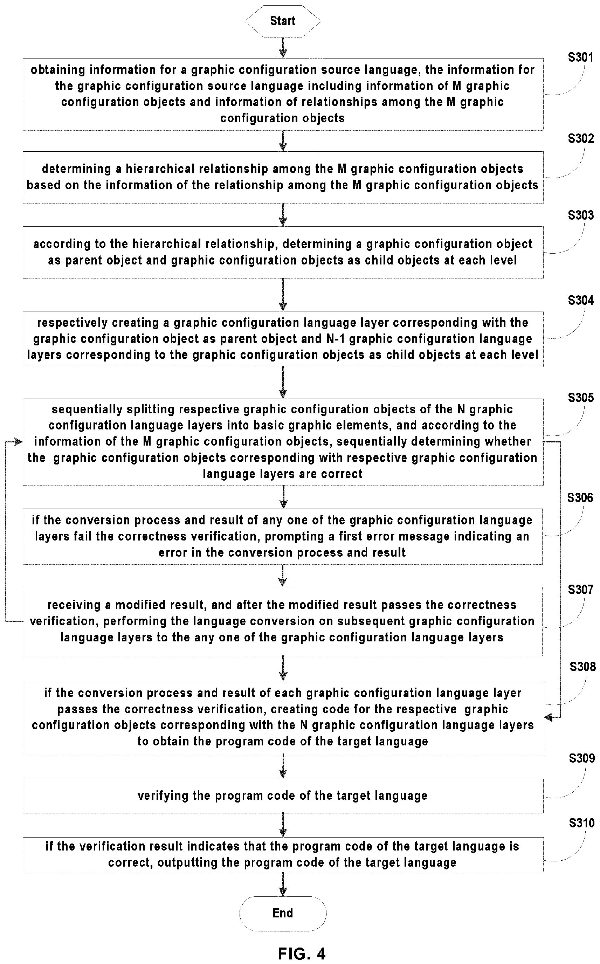

FIG. 4 is a flowchart illustrating a program language conversion method of graphic configuration according to Embodiment 2 of the present disclosure. The embodiment may be seen as another particular implementation of FIG. 2. The method can be performed in a graphic configuration language conversion apparatus illustrated in FIG. 5.

Referring to FIG. 4, in step S301, information for a graphic configuration source language is obtained, the information for the graphic configuration source language including information on a number of M graphic configuration objects and information on relationships among the M graphic configuration objects.

Processing of step S301 is the same as processing of step S210 in Embodiment 1, which is not elaborated here.

In step S302, a hierarchical relationship among the M graphic configuration objects is determined based on the information on relationships among the M graphic configuration objects.

Processing of step S302 is the same as processing of step S220 in Embodiment 1, which is not elaborated here.

In step S303, one graphic configuration object as parent object and graphic configuration objects as child objects at each level are determined according to the hierarchical relationship.

For example, reactor 1 and reactor 2 illustrated in Embodiment 1 belong to a lower layer of plant 1. Thus, plant 1 may be referred to as parent object, and accordingly, reactor 1 and reactor 2 may be referred to as child objects at the first level. Similarly, digital protection system 1 and digital protection system 2 belong to a lower layer of reactor 1. Therefore, digital protection system 1 and digital protection system 2 may be referred to as child objects at the second level. Accordingly, basis for the creation of graphic configuration language layers in subsequent steps is provided.

In step S304, a graphic configuration language layer corresponding with the graphic configuration object as parent object and A NUMBER OF N-1 graphic configuration language layers corresponding with the graphic configuration objects as child objects at each level are respectively created.

Still taking the example of the aforementioned plant, reactors and digital protection systems, with processing in step S303, a graphic configuration language layer corresponding with plant 1 is created, a graphic configuration language layer corresponding with the reactor 1 and reactor 2 is created, and a graphic configuration language layer corresponding with digital protection system 1 and digital protection system 2 is created. It can be seen that an equal number of graphic configuration language layers corresponding with the number of levels of objects (the parent object is marked at the first level) are created.

In step S305, graphic configuration objects corresponding with the respective N graphic configuration language layers are sequentially split into basic graphic elements, and according to the information on the M graphic configuration objects, it is sequentially determined whether the graphic configuration objects corresponding with respective graphic configuration language layers are correct.

Here, the basic graphic elements include at least one of the following: points, line segments, circles, rectangles, polygons, and bitmaps, but are not limited thereto.

In step S306, if a conversion process and conversion result of any one of the graphic configuration language layers fails the correctness verification, a first error message indicating an error in the conversion process and conversion result is prompted.

In step S307, a modified result is received, and after the modified result passes correctness verification, language conversion on a subsequent graphic configuration language layer to the any one of the graphic configuration language layers is performed.

In step S308, if the conversion process and conversion result of respective graphic configuration language layers passes the correctness verification, code for the graphic configuration objects respectively corresponding with the N graphic configuration language layers is generated to obtain program code in the target language.

In step S309, program code in a target language is verified.

It should be noted that the target language may be C programming language, but it is not limited thereto. Correspondingly, according to an exemplary embodiment of the present disclosure, step S309 may include: determining whether the program code in C programming language calls a function for drawing basic graphic elements; if the program code in C programming language calls a function for drawing basic graphic elements, a verification result indicating that the program code in the target language is correct is returned; if the program code in C language does not call a function for drawing basic graphic elements, a second error message indicating that the code is incorrectly generated is prompted.

In practical applications, after the second error message is prompted, a modified result may also be received; and after the modified result passes program code verification, the program code in the target language is output.

In step S310, if the verification result indicates that the program code in the target language is correct, the program code in the target language is output.

The program language conversion method of graphic configuration provided by embodiments of the present disclosure has the following technical effects.

In one aspect, graphic configuration language layers are created more accurately, based on a graphic configuration object as parent object and child objects at each level determined according to their hierarchical relationship.

In another aspect, by splitting respective graphic configuration objects of the N graphic configuration language layers into corresponding basic graphic elements, and, code for the graphic configuration objects respectively corresponding with the N graphic configuration language layers is generated according to the basic graphic elements obtained from the splitting, and the program code in the target language is verified, thereby ensuring quality of the program code.

In yet another aspect, in this embodiment, if the conversion process and conversion result of any one of the graphic configuration language layers fails the correctness verification, an error message is prompted to relevant personnel for modification. Language conversion process of subsequent graphic configuration language layers is done only after the modification is correct. Hence, correctness of the code generation tool itself for graphic configuration software and quality of the generated code are further ensured.

### Embodiment 3

Based on the same technical inventive concept, FIG. 5 is a logic block diagram illustrating a graphic configuration language conversion apparatus according to Embodiment 3 of the present disclosure. The graphic configuration language conversion apparatus can be used for performing the program language conversion method of graphic configuration as described in Embodiment 1.

Referring to FIG. 5, the graphic configuration language conversion apparatus includes a source program language obtaining module 410, a relationship determining module 420, a language layer determining module 430, a program language conversion and verification module 440, and a code translation module 450.

The source language obtaining module 410 is configured for obtaining source program language of a graphic configuration, the source program language of the graphic configuration source language including information of a number of M graphic configuration objects and relationship information on s among the M graphic configuration objects.

The relationship determining module 420 is configured for determining a hierarchical relationship among the M graphic configuration objects based on the relationship information s among the M graphic configuration objects.

The language layer determining module 430 is configured for sequentially determining N graphic configuration language layers and graphic configuration objects corresponding with respective graphic configuration language layers, according to the hierarchical relationship.

The language conversion and verification module 440 is configured for sequentially performing language conversion on the graphic configuration objects corresponding with the respective N graphic configuration language layers and for verifying correctness of conversion processes and conversion results.

The code translation module 450 is configured for, if the conversion process and conversion result of respective graphic configuration language layers passes the correctness verification, translating the information for the graphic configuration source language into program code in a target language according to the conversion result.

Wherein M≥1, N≥1, M≥N, and M and N are both integers.

According to the source program language conversion of graphic configuration apparatus provided by embodiments of the present disclosure, a hierarchical relationship among M graphic configuration objects is determined based on the relationship information among the M graphic configuration objects obtained from source program language information of a graphic configuration; N graphic configuration language layers and graphic configuration objects corresponding with respective graphic configuration language layers are sequentially determined according to the hierarchical relationship; further, program language conversion of the respective graphic configuration objects corresponding with the N graphic configuration language layers are sequentially performed and correctness of the conversion process and conversion result is verified; if the conversion process and conversion result of respective graphic configuration language layers passes the correctness verification, the source program language of the graphic configuration is translated into program code in a target language according to the conversion result. As such, conversion from source program language of a graphic configuration to program code in a target language is achieved, thereby ensuring correctness of the code generation tool itself for graphic configuration software and quality of the generated code ensured.

### Embodiment 4

Based on the same technical inventive concept, FIG. 6 is a logic block diagram illustrating a source program language conversion of graphic configuration apparatus according to Embodiment 4 of the present disclosure. The source program language conversion of graphic configuration apparatus can be used for performing the program language conversion method of graphic configuration as described in Embodiment 2.

Referring to FIG. 6, the language layer determining module 430 may specifically include:
an object determining unit 4301 configured for, according to the hierarchical relationship, determining one graphic configuration object as parent object and graphic configuration objects as child objects at each level;
A language layer creating unit 4302 configured for, respectively creating a graphic configuration language layer corresponding with the graphic configuration object as the parent object and a number of N-1 graphic configuration language layers corresponding with the graphic configuration objects as child objects at each level.

Optionally, the language conversion and verification module 440 may be configured for, according to the information on the M graphic configuration objects, sequentially determining whether the graphic configuration objects corresponding with respective graphic configuration language layers are correct.

Further, the language conversion and verification module 440 may be configured for sequentially splitting respective graphic configuration objects corresponding with the N graphic configuration language layers into basic graphic elements.

Here, the basic graphic elements may include at least one of the following: points, line segments, circles, rectangles, polygons, and bitmaps, but are not limited thereto.

Optionally, the code translation module 450 may be configured for, according to the basic graphic elements obtained from the splitting, generating code for the respective graphic configuration objects corresponding with the N graphic configuration language layers to obtain program code in a target language.

Further, the source program language conversion of graphic configuration apparatus may further include:
an error message prompting module 460 configured for, if a conversion process and conversion result of any one of the graphic configuration language layers fails correctness verification, prompting a first error message indicating an error in the conversion process and conversion result;
a modified result receiving module 470 configured for receiving a modified result, and after the modified result passes the correctness verification, performing language conversion on a subsequent graphic configuration language layer to the any one of the graphic configuration language layers.

Furthermore, the source program language conversion of graphic configuration apparatus may further include:
a code verification module 480 configured for verifying the program code in the target language;
a code outputting module 490 configured for, if the verification result indicates that the program code in the target language is correct, outputting the program code in the target language.

Specifically, the target language may be C programming language. Correspondingly, the code verification module 480 is configured for determining whether the program code in C programming language calls a function for drawing basic graphic elements; if the program code in C programming language calls a function for drawing basic graphic elements, generating a verification result indicating that the program code in the target language is correct; if the program code in C programming language does not call a function for drawing basic graphic elements, prompting a second error message indicating that the code is incorrectly generated.

The source program language conversion of graphic configuration apparatus provided by embodiments of the present disclosure has the following technical effects:
First, graphic configuration language layers are created more accurately, based on a graphic configuration object as parent object and child objects at each level determined according to a hierarchical relationship.
Secondly, by splitting respective graphic configuration objects corresponding with the N graphic configuration language layers into basic graphic elements, and generating code for the respective graphic configuration objects corresponding with the N graphic configuration language layers according to the basic graphic elements obtained from the splitting, and verifying the program code in the target language, quality of the program code can be ensured.
Thirdly, in this embodiment, if the conversion process and conversion result of any one of the graphic configuration language layers fails the correctness verification, an error message is prompted to relevant personnel for modification. Language conversion process of subsequent graphic configuration language layers is done only after the modification is correct. Hence, correctness of the code generation tool itself for graphic configuration software and quality of the generated code are further ensured.

It should be noted that according to requirements for implementation, each step/component described in the present application can be divided into more steps/components, and two or more steps/components or partial operations of the steps/components can also be combined into new ones to achieve purposes of the present disclosure.

The above-described method according to the present disclosure may be implemented in hardware, firmware, or may be implemented as software or computer code that may be stored in a recording medium (such as a CD ROM, RAM, floppy disk, hard disk, or magneto-optical disk), or may be implemented as computer code that is to be stored in a local recording medium downloaded via a network which is originally stored on a remote recording medium or non-transitory machine-readable medium, so that the methods described herein can be executed with such software in the recording medium stored in a general purpose computer, a dedicated processor, or programmable or dedicated hardware (such as an ASIC or an FPGA). It will be appreciated that a computer, processor, microprocessor controller, or programmable hardware includes storage components (eg, RAM, ROM, flash memory, etc.) that can store or receive software or computer code. When the software or computer code is accessed and executed by a computer, processor or hardware, the methods described herein are executed. In addition, when a general purpose computer is accessed to implement the code illustrated herein, execution of the code converts the general purpose computer to a special purpose computer for performing the process illustrated herein.

## Claims

1. A program language conversion method of graphic configuration, the method comprises:
obtaining (S210) a source program language of a graphic configuration, the source program language of the graphic configuration including a number of M graphic configuration objects and relationship information among the M graphic configuration objects;
determining (S220) a hierarchical relationship among the M graphic configuration objects based on the relationship information among the M graphic configuration objects;
sequentially (S230) determining a number of N graphic configuration language layers and graphic configuration objects corresponding with respective the graphic configuration language layers according to the hierarchical relationship; **characterized in that** sequentially (S240)
performing program language conversion on the respective graphic configuration objects corresponding with the N graphic configuration language layers, said sequentially performing program language conversion comprising sequentially splitting respective graphic configuration objects corresponding with the N graphic configuration language layers into basic graphic elements, and according to the basic graphic elements obtained from the splitting, generating code for the respective graphic configuration objects corresponding with the N graphic configuration language layers to obtain program code in the target language, and verifying correctness of the conversion process and the conversion result for each graphic configuration language layer;
wherein verifying correctness of said conversion process and conversion result further comprises, sequentially determining whether the graphic configuration objects correspond with respective graphic configuration language layers in the target language;
if the conversion process and conversion result of respective graphic configuration language layers passes correctness verification (S250), translating the source program language of the graphic configuration into a program code in a target program language according to the results of said program language conversion;
wherein M≥1, N≥1, M≥N, and M and N are both integers.

2. The method according to claim 1, wherein sequentially determining a number of N graphic configuration language layers and corresponding graphic configuration objects in respective graphic configuration language layers according to the hierarchical relationship, comprises:
determining a graphic configuration object as parent object and graphic configuration objects as child objects at each level, according to the hierarchical relationship;
respectively creating one graphic configuration language layer corresponding with the graphic configuration object as parent object and a number of N-1 graphic configuration language layers corresponding with the graphic configuration objects as child objects at each level.

3. The method according to claim 1, wherein the method further comprises:
if the conversion process and conversion result of any one of the graphic configuration language layers fails the correctness verification, prompting a first error message indicating an error in the conversion process and conversion result;
receiving a modified result, and after the modified result passes the correctness verification, performing program language conversion on a subsequent graphic configuration language layer to the any one of the graphic configuration language layers.

4. The method according to claim 3, wherein the target language is C programming language, and verifying the program code in the target program language comprises:
determining whether the program code in C programming language calls a function for drawing basic graphic elements;
if the program code in C programming language calls a function for drawing basic graphic elements, generating a verification result indicating that the program code in the target program language is correct;
if the program code in C programming language does not call a function for drawing basic graphic elements, prompting a second error message indicating that the code is incorrectly generated.

5. The method according to any one of claims 3 to 4 wherein the basic graphic elements comprise at least one of the following: points, line segments, circles, rectangles, polygons, and bitmaps.

6. A program language conversion apparatus of graphic configuration, **characterized in that** the apparatus comprises:
a source program language obtaining module (410), configured for obtaining a source program language of a graphic configuration, the source program language of the graphic configuration including a number of M graphic configuration objects and relationship information among the M graphic configuration objects;
a relationship determining module (420), configured for determining a hierarchical relationship among the M graphic configuration objects based on the relationship information among the M graphic configuration objects;
a language layer determining module (430), configured for sequentially determining a number of N graphic configuration language layers and corresponding graphic configuration objects in respective graphic configuration language layers according to the hierarchical relationship;
a program language conversion and verification module (440), configured for sequentially performing language conversion on the respective graphic configuration objects corresponding with the N graphic configuration language layers, said sequentially performing program language conversion comprising sequentially splitting respective graphic configuration objects corresponding with the N graphic configuration language layers into basic graphic elements, and according to the basic graphic elements obtained from the splitting, generating code for the respective graphic configuration objects corresponding with the N graphic configuration language layers to obtain program code in the target language, and verifying correctness of a conversion process and conversion result; wherein verifying correctness of said conversion process and conversion result further comprises sequentially determining whether the graphic configuration objects correspond with respective graphic configuration language layers in the target language;
a code translation module (450), configured for, if the conversion process and conversion result of respective graphic configuration language layers passes correctness verification, translating the information for the graphic configuration source program language into a program code in a target program language according to the results of said program language conversion;
wherein M≥1, N≥1, M≥N, and M and N are both integers.

7. The apparatus according to claim 6, wherein the language layer determining module (430) comprises:
an object determining unit (4301), configured for determining a graphic configuration object as parent object and graphic configuration objects as child objects at each level, according to the hierarchical relationship;
a language layer creating unit (4302), configured for respectively creating one graphic configuration language layer corresponding with the graphic configuration object as parent object and a number of N-1 graphic configuration language layers corresponding with the graphic configuration objects as child objects at each level.

8. The apparatus according to claim 7, wherein the apparatus further comprises:
a code verification module (480), configured for verifying the program code in the target program language;
a code outputting module (490), configured for, if the verification result indicates that the program code in the target program language is correct, outputting the program code in the target program language.

9. The apparatus according to claim 6 wherein the target language is C programming language, and the code verification module is configured for determining whether the program code in C programming language calls a function for drawing basic graphic elements; if the program code in C programming language calls a function for drawing basic graphic elements, generating a verification result indicating that the program code in the target program language is correct; if the program code in C programming language does not call a function for drawing basic graphic elements, prompting a second error message indicating that the code is incorrectly generated.

10. The apparatus according to any one of claims 6 to 9 wherein the basic graphic elements comprise at least one of the following: points, line segments, circles, rectangles, polygons, and bitmaps.

## Patentansprüche

1. Programmiersprachenkonvertierungsverfahren für Grafikkonfigurationen, wobei das Verfahren umfasst:
Beziehen (S210) einer Quellprogrammiersprache einer Grafikkonfiguration, wobei die Quellprogrammiersprache der Grafikkonfiguration eine Anzahl von M Grafikkonfigurationsobjekten und Beziehungsinformationen zwischen den M Grafikkonfigurationsobj ekten enthält;
Bestimmen (S220) einer hierarchischen Beziehung zwischen den M Grafikkonfigurationsobjekten auf der Grundlage der Beziehungsinformationen zwischen den M Grafikkonfigurationsobjekten,
sequentielles (S230) Bestimmen einer Anzahl von N Grafikkonfigurationssprachebenen und Grafikkonfigurationsobjekten, die den jeweiligen Grafikkonfigurationssprachebenen entsprechen, gemäß der hierarchischen Beziehung;
**gekennzeichnet durch**
sequentielles (S240) Durchführen einer Programmiersprachenkonvertierung an den jeweiligen Grafikkonfigurationsobjekten, die den N Grafikkonfigurationssprachebenen entsprechen, wobei das sequenzielle Durchführen der Programmiersprachenkonvertierung das sequentielle Aufteilen der jeweiligen Grafikkonfigurationsobjekte, die den N Grafikkonfigurationssprachebenen entsprechen, in grundlegende Grafikelemente umfasst, und gemäß den aus dem Aufteilen erhaltenen grundlegenden Grafikelementen, Erzeugen von Code für die jeweiligen Grafikkonfigurationsobjekte, die den N Grafikkonfigurationssprachebenen entsprechen, um einen Programmcode in der Zielsprache zu erhalten, und Überprüfen der Korrektheit des Konvertierungsprozesses und des Konvertierungsergebnisses für jede Grafikkonfigurationssprachebene,
wobei das Überprüfen der Korrektheit des Konvertierungsprozesses und des Konvertierungsergebnisses ferner das sequentielle Bestimmen umfasst, ob die Grafikkonfigurationsobjekte mit entsprechenden Grafikkonfigurationssprachebenen in der Zielsprache übereinstimmen;
wenn der Konvertierungsprozess und das Konvertierungsergebnis der jeweiligen Grafikkonfigurationssprachebenen die Korrektheitsprüfung (S250) bestehen, Übersetzen der Quellprogrammiersprache der Grafikkonfiguration in einen Programmcode in einer Zielprogrammiersprache gemäß den Ergebnissen der genannten Programmiersprachenkonvertierung;
wobei M ≥ 1, N ≥ 1, M ≥ N, und M und N beide ganze Zahlen sind.

2. Verfahren nach Anspruch 1, wobei das sequentielle Bestimmen einer Anzahl von N Grafikkonfigurationssprachebenen und entsprechender Grafikkonfigurationsobjekte in jeweiligen Grafikkonfigurationssprachebenen gemäß der hierarchischen Beziehung umfasst:
Bestimmen eines Grafikkonfigurationsobjekts als übergeordnetes Objekt und von Grafikkonfigurationsobjekten als untergeordnete Objekte auf jeder Ebene entsprechend der hierarchischen Beziehung;
jeweiliges Erzeugen einer Grafikkonfigurationssprachebene, die dem Grafikkonfigurationsobjekt als übergeordnetes Objekt entspricht, und einer Anzahl von N-1 Grafikkonfigurationssprachebenen, die den Grafikkonfigurationsobjekten als untergeordnete Objekte auf jeder Ebene entsprechen.

3. Verfahren nach Anspruch 1, wobei das Verfahren des Weiteren umfasst:
wenn der Konvertierungsprozess und das Konvertierungsergebnis einer der Grafikkonfigurationssprachebenen die Korrektheitsprüfung nicht bestehen, Ausgeben einer ersten Fehlermeldung, die einen Fehler im Konvertierungsprozess und im Konvertierungsergebnis anzeigt,
Empfangen eines modifizierten Ergebnisses und, nachdem das modifizierte Ergebnis die Korrektheitsprüfung bestanden hat, Durchführen einer Programmiersprachenkonvertierung auf einer nachfolgenden Grafikkonfigurationssprachebene in eine beliebige der Grafikkonfigurationssprachebenen.

4. Verfahren nach Anspruch 3, wobei die Zielsprache die Programmiersprache C ist und das Überprüfen des Programmcodes in der Zielprogrammiersprache umfasst:
Bestimmen, ob der Programmcode in der Programmiersprache C eine Funktion zum Zeichnen grundlegender Grafikelemente aufruft;
wenn der Programmcode in der Programmiersprache C eine Funktion zum Zeichnen grundlegender Grafikelemente aufruft, Erzeugen eines Prüfergebnisses, das anzeigt, dass der Programmcode in der Zielprogrammiersprache korrekt ist;
wenn der Programmcode in der Programmiersprache C keine Funktion zum Zeichnen grundlegender Grafikelemente aufruft, Ausgeben einer zweiten Fehlermeldung, die darauf hinweist, dass der Code nicht korrekt erstellt wurde.

5. Verfahren nach einem der Ansprüche 3 bis 4, wobei die grundlegenden Grafikelemente mindestens eines der folgenden Elemente umfassen: Punkte, Liniensegmente, Kreise, Rechtecke, Polygone und Bitmaps.

6. Programmiersprachenkonvertierungsvorrichtung für Grafikkonfigurationen, **dadurch gekennzeichnet, dass** die Vorrichtung umfasst:
ein Modul (410) zum Erhalten einer Quellprogrammiersprache, das dazu konfiguriert ist, eine Quellprogrammiersprache einer Grafikkonfiguration zu erhalten, wobei die Quellprogrammiersprache der Grafikkonfiguration eine Anzahl von M Grafikkonfigurationsobjekten und Beziehungsinformationen zwischen den M Grafikkonfigurationsobj ekten enthält;
ein Beziehungsbestimmungsmodul (420), das dazu konfiguriert ist, eine hierarchische Beziehung zwischen den M Grafikkonfigurationsobjekten auf der Grundlage der Beziehungsinformationen zwischen den M Grafikkonfigurationsobjekten zu bestimmen;
ein Sprachebenenbestimmungsmodul (430), das zum sequentiellen Bestimmen einer Anzahl von N Grafikkonfigurationssprachebenen und entsprechender Grafikkonfigurationsobjekte in jeweiligen Grafikkonfigurationssprachebenen gemäß der hierarchischen Beziehung konfiguriert ist:
ein Programmiersprachenkonvertierungs- und -überprüfungsmodul (440), das zum sequenzielle Durchführen von Sprachkonvertierung an den jeweiligen Grafikkonfigurationsobjekten konfiguriert ist, die den N Grafikkonfigurationssprachebenen entsprechen, wobei das sequenzielle Durchführen der Programmiersprachenkonvertierung das sequentielle Aufteilen der jeweiligen Grafikkonfigurationsobjekte, die den N Grafikkonfigurationssprachebenen entsprechen, in grundlegende Grafikelemente umfasst, und gemäß den aus dem Aufteilen erhaltenen grundlegenden Grafikelementen, Erzeugen von Code für die jeweiligen Grafikkonfigurationsobjekte, die den N Grafikkonfigurationssprachebenen entsprechen, um einen Programmcode in der Zielsprache zu erhalten, und Überprüfen der Korrektheit eines Konvertierungsprozesses und eines Konvertierungsergebnisses; wobei das Überprüfen der Korrektheit des Konvertierungsprozesses und des Konvertierungsergebnisses ferner das sequenzielle Bestimmen umfasst, ob die Grafikkonfigurationsobjekte jeweiligen Grafikkonfigurationssprachebenen in der Zielsprache entsprechen,
ein Codeübersetzungsmodul (450), das, wenn der Konvertierungsprozess und das Konvertierungsergebnis der jeweiligen Grafikkonfigurationssprachebenen die Korrektheitsprüfung besteht, zum Übersetzen der Informationen für die Grafikkonfigurations-Quellprogrammiersprache in einen Programmcode in einer Zielprogrammiersprache gemäß den Ergebnissen der Programmiersprachenkonvertierung konfiguriert ist,
wobei M ≥ 1, N ≥ 1, M ≥ N und M und N beide ganze Zahlen sind.

7. Vorrichtung nach Anspruch 6, wobei das Sprachebenenbestimmungsmodul (430) umfasst:
eine Objektbestimmungseinheit (4301), die zum Bestimmen eines Grafikkonfigurationsobjekts als übergeordnetes Objekt und von Grafikkonfigurationsobjekten als untergeordnete Objekte auf jeder Ebene entsprechend der hierarchischen Beziehung konfiguriert ist;
eine Sprachebenenerzeugungseinheit (4302), die zum jeweiligen Erzeugen einer Grafikkonfigurationssprachebene konfiguriert ist, die dem Grafikkonfigurationsobjekt als übergeordnetes Objekt entspricht, und einer Anzahl von N-1 Grafikkonfigurationssprachebenen, die den Grafikkonfigurationsobjekten als untergeordnete Objekte auf jeder Ebene entsprechen.

8. Vorrichtung nach Anspruch 7, wobei die Vorrichtung des Weiteren umfasst:
ein Codeüberprüfungsmodul (480), das zum Überprüfen des Programmcodes in der Zielprogrammiersprache konfiguriert ist;
ein Codeausgabemodul (490), das, wenn das Überprüfungsergebnis anzeigt, dass der Programmcode in der Zielprogrammiersprache korrekt ist, dazu programmiert ist, den Programmcode in der Zielprogrammiersprache auszugeben.

9. Vorrichtung nach Anspruch 6, wobei die Zielsprache die Programmiersprache C ist und das Codeüberprüfungsmodul zum Bestimmen konfiguriert ist, ob der Programmcode in der Programmiersprache C eine Funktion zum Zeichnen grundlegender Grafikelemente aufruft; wenn der Programmcode in der Programmiersprache C eine Funktion zum Zeichnen grundlegender Grafikelemente aufruft, Erzeugen eines Überprüfungsergebnisses, das anzeigt, dass der Programmcode in der Zielprogrammiersprache korrekt ist, wenn der Programmcode in der Programmiersprache C keine Funktion zum Zeichnen grundlegender Grafikelemente aufruft, Ausgeben einer zweiten Fehlermeldung, die anzeigt, dass der Code fehlerhaft erzeugt wurde.

10. Vorrichtung nach einem der Ansprüche 6 bis 9, wobei die grundlegenden Grafikelemente mindestens eines der folgenden Elemente umfassen: Punkte, Liniensegmente, Kreise, Rechtecke, Polygone und Bitmaps.

## Revendications

1. Un procédé de conversion de langage de programme de configuration graphique, le procédé comprend:
obtention (S210) d'un langage de programme source d'une configuration graphique, le langage du programme source de la configuration graphique comprenant un nombre d'objets de configuration graphique M et des informations sur la relation entre les objets de configuration graphique M;
détermination (S220) d'une relation hiérarchique entre les objets de configuration graphique M sur la base des informations sur la relation entre les objets de configuration graphique M;
détermination séquentielle (S230) d'un nombre de N couches de langage de configuration graphique et d'objets de configuration graphique correspondant aux couches de langage de configuration graphique respectives selon la relation hiérarchique;
**caractérisé en ce que**
réalisation séquentielle (S240) d'une conversion de langage de programme sur les objets de configuration graphique respectifs correspondant aux N couches de langage de configuration graphique, ladite conversion de langage de programme à réalisation séquentielle comprenant la division séquentielle d'objets de configuration graphique respectifs correspondant aux N couches de langage de configuration graphique en éléments graphiques de base, et selon les éléments graphiques de base obtenus à partir de la division, la génération d'un code pour les objets de configuration graphique respectifs correspondant aux N couches de langage de configuration graphique pour obtenir un code de programme dans le langage cible, et vérification de l'exactitude du processus de conversion et du résultat de conversion pour chaque couche de langage de configuration graphique,
dans lequel la vérification de l'exactitude desdits processus de conversion et résultat de conversion comprend en outre, déterminer séquentiellement si les objets de configuration graphique correspondent aux couches de langage de configuration graphique respectives dans le langage cible;
si le processus de conversion et le résultat de conversion des couches de langage de configuration graphique respectives passent la vérification de l'exactitude (S250), traduire le langage de programme source de la configuration graphique en un code de programme dans un langage de programme cible selon les résultats de ladite conversion de langage de programme;
dans lequel M≥1, N≥1, M≥N, et M et N sont tous deux des entiers.

2. Le procédé selon la revendication 1, dans lequel la détermination séquentielle d'un nombre de N couches de langage de configuration graphique et d'objets de configuration graphique correspondants dans les couches de langage de configuration graphique respectives selon la relation hiérarchique, comprend:
détermination d'un objet de configuration graphique en tant qu'objet parent et d'objets de configuration graphique en tant qu'objets enfants à chaque niveau, selon la relation hiérarchique;
création respective d'une couche de langage de configuration graphique correspondant à l'objet de configuration graphique en tant qu'objet parent et d'un nombre de N-1 couches de langage de configuration graphique correspondant aux objets de configuration graphique en tant qu'objets enfants à chaque niveau.

3. Le procédé selon la revendication 1, dans lequel le procédé comprend en outre:
si le processus de conversion et le résultat de conversion de l'une quelconque des couches de langage de configuration graphique échoue à la vérification de l'exactitude, un premier message d'erreur s'affiche indiquant une erreur dans le processus de conversion et le résultat de conversion;
la réception d'un résultat modifié, et après que le résultat modifié ait passé la vérification de l'exactitude, la réalisation d'une conversion de langage de programme sur une couche de langage de configuration graphique ultérieure vers l'une quelconque des couches de langage de configuration graphique.

4. Le procédé selon la revendication 3, dans lequel le langage cible est un langage de programmation C, et la vérification du code de programme dans le langage de programme cible comprend:
déterminer si le code du programme dans le langage de programmation C appelle une fonction permettant de dessiner des éléments graphiques de base,
si le code du programme dans le langage de programmation C appelle une fonction permettant de dessiner des éléments graphiques de base, générer un résultat de vérification indiquant que le code du programme dans le langage de programme cible est correct;
si le code du programme dans le langage de programmation C n'appelle pas de fonction permettant de dessiner des éléments graphiques de base, un deuxième message d'erreur s'affiche indiquant que le code est généré de manière correcte.

5. Le procédé selon l'une quelconque des revendications 3 à 4, dans lequel les éléments graphiques de base comprennent au moins l'un des éléments suivants: des points, des segments de ligne, des cercles, des rectangles, des polygones, et des bitmaps.

6. Un appareil de conversion de langage de programme de configuration graphique, **caractérisé en ce que** l'appareil comprend:
un module d'obtention de langage de programme source (410), configuré pour obtenir un langage de programme source d'une configuration graphique, le langage de programme source de la configuration graphique comprenant un nombre d'objets de configuration graphique M et des informations de relation entre les objets de configuration graphique M;
un module de détermination de relation (420), configuré pour déterminer une relation hiérarchique entre les objets de configuration graphique M sur la base des informations sur les relation entre les objets de configuration graphique M;
un module de détermination de couche de langage (430), configuré pour déterminer séquentiellement un nombre de N couches de langage de configuration graphique et d'objets de configuration graphique correspondants dans les couches de langage de configuration graphique respectives selon la relation hiérarchique;
un module de conversion et de vérification de langage de programme (440), configuré pour réaliser séquentiellement une conversion de langage sur les objets de configuration graphique respectifs correspondant aux N couches de langage de configuration graphique, ladite conversion de langage de programme à réalisation séquentielle comprenant la division séquentielle d'objets de configuration graphique respectifs correspondant aux N couches de langage de configuration graphique en éléments graphiques de base, et selon les éléments graphiques de base obtenus à partir de la division, générer un code pour les objets de configuration graphique respectifs correspondant aux N couches de langage de configuration graphique pour obtenir un code de programme dans le langage cible, et vérifier l'exactitude d'un processus de conversion et d'un résultat de conversion; dans lequel la vérification de l'exactitude desdits processus de conversion et résultat de conversion comprend en outre déterminer séquentiellement si les objets de configuration graphique correspondent aux couches de langage de configuration graphique respectives dans le langage cible;
un module de traduction de code (450), configuré pour, si le processus de conversion et le résultat de conversion des couches de langage de configuration graphique respectives passent la vérification de l'exactitude, traduire les informations du langage de programme source de configuration graphique en un code de programme dans un langage de programme cible selon des résultats de ladite conversion de langage de programme;
dans lequel M≥1, N≥1, M≥N, et M et N sont tous deux des entiers.

7. L'appareil selon la revendication 6, dans lequel le module de détermination de couche de langage (430) comprend:
une unité de détermination d'objet (4301), configurée pour déterminer un objet de configuration graphique en tant qu'objet parent et des objets de configuration graphique en tant qu'objets enfants à chaque niveau, selon la relation hiérarchique;
une unité de création de couche de langage (4302), configurée pour créer respectivement une couche de langage de configuration graphique correspondant à l'objet de configuration graphique en tant qu'objet parent et un nombre de N-1 couches de langage de configuration graphique correspondant aux objets de configuration graphique en tant qu'objets enfants à chaque niveau.

8. L'appareil selon la revendication 7, dans lequel l'appareil comprend en outre:
un module de vérification de code (480), configuré pour vérifier le code de programme dans le langage de programme cible;
un module de sortie de code (490), configuré pour, si le résultat de vérification indique que le code du programme dans le langage de programme cible est correct, sortir le code de programme dans le langage de programme cible.

9. L'appareil selon la revendication 6, dans lequel le langage cible est un langage de programmation C, et le module de vérification de code est configuré pour déterminer si le code de programme dans le langage de programmation C appelle une fonction permettant de dessiner des éléments graphiques de base, si le code de programme dans le langage de programmation C appelle une fonction permettant de dessiner des éléments graphiques de base, générer un résultat de vérification indiquant que le code de programme dans le langage de programme cible est correct; si le code de programme dans le langage de programmation C n'appelle pas de fonction permettant de dessiner des éléments graphiques de base, un deuxième message d'erreur s'affiche indiquant que le code est généré de manière incorrecte.

10. L'appareil selon l'une quelconque des revendications 6 à 9, dans lequel les éléments graphiques de base comprennent au moins l'un des éléments suivants: des points, des segments de ligne, des cercles, des rectangles, des polygones, et des bitmaps.
